# EUROPÄISCHE PATENTSCHRIFT

(11) **EP 3 683 912 B1**
(45) Veröffentlichungstag und Bekanntmachung des Hinweises auf die Patenterteilung: **24.08.2022**
(21) Anmeldenummer: 19152834.8
(22) Anmeldetag: 21.01.2019
(51) Int. Cl.: H02J 3/34, H02J 7/00, H02J 7/32, H02J 7/34

(54) **SCHUTZSCHALTUNG ZWISCHEN EINER LADEVORRICHTUNG UND EINEM NETZANSCHLUSS**
PROTECTIVE CIRCUIT BETWEEN A CHARGER AND A POWER CONNECTION
CIRCUIT DE PROTECTION ENTRE UN DISPOSITIF DE CHARGEMENT ET UN RACCORDEMENT AU RÉSEAU

(43) Veröffentlichungstag der Anmeldung: 22.07.2020
(73) Patentinhaber: ads-tec Energy GmbH, 72622 Nürtingen (DE)
(72) Erfinder: NATOUR, Ali, 73269 Hochdorf (DE); PFENDTNER, Steffen, 72631 Aichtal (DE)
(74) Vertreter: Wasmuth, Rolf

(56) Entgegenhaltungen:
- US-A1- 2012 249 065
- US-A1- 2015 202 973
- US-A1- 2017 106 764

## Beschreibung

Die Erfindung betrifft eine Schutzschaltung zwischen einer Ladevorrichtung für einen mobilen elektrischen Batteriespeicher wie einem Batteriespeicher in einem elektrischen Kraftfahrzeug und einem Netzanschluss, über den der Ladevorrichtung ein Netzladestrom zugeführt ist.

Aus der US 2015/0202973 A1 ist eine Schaltungsanordnung bekannt, mit der eine Ladestation zur Aufladung eines mobilen Batteriespeichers ein Strom zugeführt wird, der sich zu einem Teil aus dem Netz und zu einem anderen Teil aus einem stationären Batteriespeicher zusammensetzt. Eine Steuereinheit verändert die Stromanteile dynamisch, um ohne Überlastung des Netzes eine hohe Ladeleistung bereit zu stellen.

In der Praxis fordert der mobile elektrische Batteriespeicher mit Einstecken des Ladekabels einen Ladestrom an, der - je nach Auslegung der Ladeelektronik des mobilen Batteriespeichers - sehr hoch sein kann. Werden mehrere mobile Batteriespeicher, z. B. elektrische Kraftfahrzeuge, in etwa zeitgleich an eine Ladevorrichtung angeschlossen, kann die plötzlich geforderte hohe Ladeleistung extreme Werte annehmen. Die Ladevorrichtung für mobile Batteriespeicher wird regelmäßig aus einem Spannungsnetz versorgt, wobei der Netzanschluss des Spannungsnetzes mit der Ladevorrichtung elektrisch verbunden ist. Der Netzanschluss ist über Sicherungselemente abgesichert, wobei in der Praxis Zustände auftreten können, in denen der von der Ladevorrichtung geforderte Ladestrom die Sicherungsanordnung ansprechen lässt und die überlastete Phase trennt.

Das Spannungsnetz versorgt regelmäßig nicht nur die Ladevorrichtung, sondern gleichzeitig auch andere Verbraucher wie z. B. Kommunikationseinrichtungen, die bei Ansprechen der Sicherungsanordnung ausfallen.

Der Erfindung liegt die Aufgabe zugrunde, eine Schutzschaltung zwischen einer Ladevorrichtung für einen mobilen elektrischen Batteriespeicher und einem Netzanschluss anzugeben, welche ein unerwünschtes Ansprechen der Sicherungsanordnung aufgrund kurzzeitiger Überlast vermeiden soll.

Die Aufgabe wird nach den Merkmalen des Anspruchs 1 gelöst.

Die erfindungsgemäße Schutzschaltung weist einen Anschluss für eine Ladevorrichtung für einen mobilen elektrischen Batteriespeicher wie einen Batteriespeicher in einem Kraftfahrzeug und einem Netzanschluss für ein Spannungsnetz auf, über den der Ladevorrichtung ein Netzladestrom zugeführt ist. Der Netzanschluss ist über eine Sicherungsanordnung der Schutzschaltung an eine Stromsammelschiene angeschlossen, über die der Ladevorrichtung der Netzladestrom zugeführt ist. Über einen steuerbaren Spannungswandler ist an die Stromsammelschiene ferner ein stationärer Batteriespeicher angeschlossen, wobei der stationäre Batteriespeicher zwischen der Sicherungsanordnung und der Ladevorrichtung an die Stromsammelschiene kontaktiert ist. Über ein Strommessgerät wird erfasst, welcher Gesamtladestrom über die Stromsammelschiene der Ladevorrichtung zufließt.

Eine zentrale Steuerungselektronik ist mit dem Signalausgang des Strommessgerätes und mit einem Steuereingang eines steuerbaren AC/DC-Spannungswandlers verbunden. Die zentrale Steuerungselektronik ist ausgebildet, die Stromanteile des zugeführten Batterieladestroms und des zugeführten Netzladestroms derart einzustellen, dass der Netzladestrom einen vorgegebenen Maximalstrom nicht überschreitet und sich der Gesamtladestrom zur Ladevorrichtung aus dem Netzladestrom einerseits und einem über den Spannungswandler gesteuert zugeführten Batterieladestrom des stationären Batteriespeichers andererseits zusammensetzt.

In besonderer Weise ist vorgesehen, die Steuerungselektronik derart auszubilden, dass mit fortschreitender Ladezeit der Anteil des zugeführten Batterieladestroms am Gesamtladestrom erhöht wird, so dass der Anteil des Netzladestroms am Gesamtladestrom unter einem vorgegebenen Sicherheitsabstand unter den vorgegebenen Maximalstrom absinkt.

Auf diese Weise ist gewährleistet, dass der Netzladestrom mit einem Sicherheitsabstand unter einem vorgegebenen Maximalstrom liegt, so dass die Wahrscheinlichkeit eines Ansprechens der Sicherungsanordnung aufgrund einer plötzlich auftretenden Überlast reduziert ist.

Der Netzanschluss und der stationäre Batteriespeicher sind über die Stromsammelschiene wechselstromseitig gekoppelt, was den Einsatz günstiger, bekannter elektronischer Baugruppen ermöglicht.

In Weiterbildung der Erfindung ist vorgesehen, dass der vorgegebene Maximalstrom mit fortlaufender Ladezeit bis auf einen zulässigen maximalen Endwert ansteigt. Dadurch kann der Netzladestrom gesteuert an den zulässigen Endwert des Nennstroms der Sicherungsanordnung herangeführt werden, ohne dass ein Überschwingen aufgrund plötzlicher Lastwechsel auftritt. Insbesondere kann der Maximalstrom mit fortlaufender Ladezeit stufenweise bis auf einen zulässigen Endwert erhöht werden.

Die Ladevorrichtung ist insbesondere eine Ladesäule für elektrisch angetriebene Kraftfahrzeuge. Der mobile Batteriespeicher ist über eine lösbare Steckverbindung mit der Ladevorrichtung elektrisch verbunden.

Der Schutzschaltung ist zweckmäßig eine dem Netzanschluss zugeordnete Leistungsüberwachungseinheit zugeordnet, die über eine Not-Aus-Leitung mit dem Spannungswandler und/oder der Ladevorrichtung verbunden ist.

Ein Verfahren zum Betrieb einer Schutzschaltung zwischen einer Ladevorrichtung für einen mobilen elektrischen Batteriespeicher und einem Netzanschluss, über den der Ladevorrichtung ein Netzladestrom zugeführt ist, steuert die Anteile des der Ladevorrichtung zugeführten Gesamtladestroms. Der Gesamtstrom setzt sich aus einem über den Netzanschluss zugeführten Netzladestrom und einem über den Spannungswandler zugeführten Batterieladestrom eines stationären Batteriespeichers zusammen. Über eine Steuerungselektronik werden die Anteile des Netzladestroms und des Batterieladestroms am Gesamtladestrom derart angestellt, dass mit Beginn eines Ladevorgangs ein erster Ladezeitraum mit einer ersten maximal zulässigen Ladeleistung und einem Gesamtladestrom gestartet wird, dessen größerer Anteil zunächst durch den Netzladestrom bereitgestellt ist und die Steuerungselektronik bis zum Ende des ersten Ladezeitraums den Stromanteil des Batterieladestroms des stationären Batteriespeichers erhöht und dadurch den Netzladestrom absenkt.

Vorteilhaft wird das Verfahren derartig weitergebildet, dass am Ende des ersten Ladezeitraums die maximal zulässige Ladeleistung bzw. der maximal zulässige Ladestrom erhöht wird.

Es kann vorteilhaft sein, das Verfahren zum Betrieb einer Schutzschaltung derart zu steuern, dass die erhöhte Ladeleistung zunächst dem stationären Batteriespeicher entnommen wird und der Batteriestrom mit fortschreitender Ladezeit abgesenkt wird.

Zweckmäßig wird der Ladezyklus eines mobilen Batteriespeichers in mehrere aufeinander folgende Leistungsstufen eingeteilt und mit dem Start einer Leistungsstufe die erhöhte Ladeleistung zunächst dem Batteriespeicher entnommen. Mit fortschreitender Ladezeit wird der Batteriestrom abgesenkt bis die erhöhte Ladeleistung über den Netzanschluss der Ladevorrichtung zufließt.

Weitere Merkmale der Erfindung ergeben sich aus den weiteren Ansprüchen, der Beschreibung und der Zeichnung, in der nachfolgend im Einzelnen beschriebene Ausführungsbeispiele dargestellt sind. Es zeigen:
- Fig. 1: eine schematische Schaltungsanordnung der erfindungsgemäßen Schutzschaltung für eine Phase eines Spannungsnetzes,
- Fig. 2: den Verlauf der abgegebenen Leistung bzw. des Stroms über der Zeit,
- Fig. 3: den Stromverlauf des Netzladestroms und des Batterieladestroms über der Zeit.

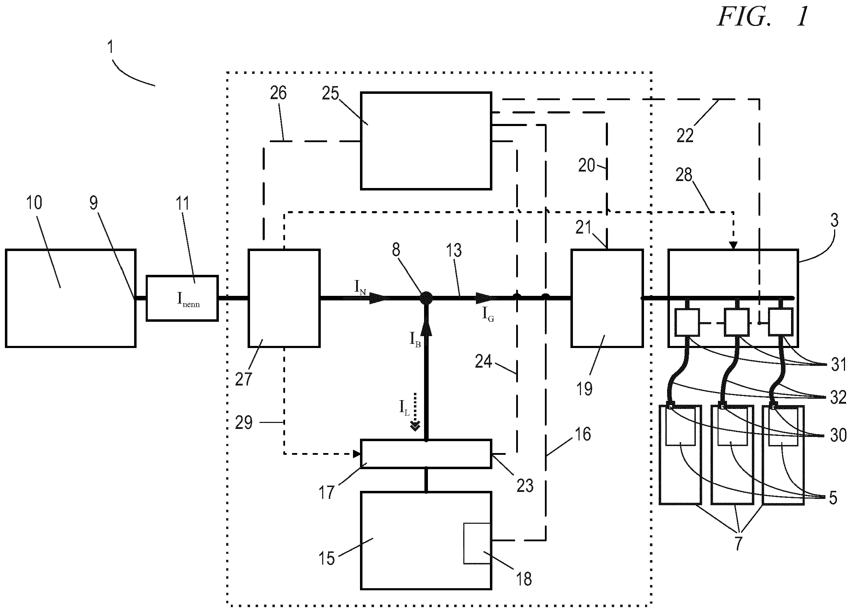

In Fig. 1 ist mit 1 die erfindungsgemäße Schutzschaltung bezeichnet, die zwischen einer Ladevorrichtung 3 für einen mobilen elektrischen Batteriespeicher 5 und einem Netzanschluss 9 vorgesehen ist. Im gezeigten Ausführungsbeispiel sind an der Ladevorrichtung 3 drei mobile Batteriespeicher 5 angeschlossen. An der Ladevorrichtung 3 können weniger oder auch mehr mobile Batteriespeicher 5 angeschlossen werden. Im gezeigten Ausführungsbeispiel sind die mobilen Batteriespeicher 5 die in einem Kraftfahrzeug 7 vorgesehenen wiederaufladbaren Batteriespeicher zum Betrieb des elektrischen Kraftfahrzeugs 7. Über den Netzanschluss 9 ist der Ladevorrichtung 3 ein Netzladestrom I_{N} zugeführt, der über Ladeanschlüsse 31 und entsprechende Ladekabel 32 den mobilen Batteriespeichern 5 zugeführt ist.

Das Ausführungsbeispiel nach Fig. 1 gibt die Schutzschaltung 1 für eine Phase des Netzanschlusses 9 wieder. Bei einem dreiphasigen Anschluss der Ladevorrichtung 3 an ein Spannungsnetz 10 ist je eine Schutzschaltung 1 je Netzphase vorgesehen.

Der Netzanschluss 9 des Spannungsnetzes 10 ist über eine Sicherungsanordnung 11 an eine Stromsammelschiene 13 angeschlossen, über die der Ladevorrichtung 3 der Netzladestrom I_{N} zugeführt ist.

An die Stromsammelschiene 13 ist ferner ein stationärer Batteriespeicher 15 über einen AC/DC-Spannungswandler 17 angeschlossen. Der Spannungswandler 17 ist steuerbar, so dass der der Stromsammelschiene 13 zufließende Batteriestrom I_{B} einstellbar ist. Der stationäre Batteriespeicher 15 ist zwischen der Sicherungsanordnung 11 und der Ladevorrichtung 3 mit der Stromsammelschiene 13 verbunden. Der der Stromsammelschiene 13 zugeführte Netzladestrom I_{N} sowie der steuerbar zugeführte Batterieladestrom I_{B} vereinen sich im Knoten 8 zu einem Gesamtladestrom I_{G}, welcher der Ladevorrichtung 3 zugeführt ist.

Der Gesamtladestrom I_{G} wird von einem Strommessgerät 19 erfasst, dessen Signalausgang 21 über eine Signalleitung 20 einer zentralen Steuerungselektronik 25 zugeführt ist. Das Strommessgerät 19 kann alternativ als Leistungsmessgerät ausgebildet sein.

Über eine Steuerleitung 24 ist die zentrale Steuerungselektronik 25 mit einem Steuereingang 23 des AC/DC-Spannungswandlers 17 verbunden. Zweckmäßig ist die zentrale Steuerungselektronik 25 ferner über eine Signalleitung 22 mit den Ladeanschlüssen 31 verbunden. Die Signalleitung 22 kann einerseits als Not-Aus-Leitung alle Ladeanschlüsse 31 sperren und/oder jedem einzelnen Ladeanschluss 31 Maximalwerte zum Ladestrom bzw. zur Ladeleistung vorgeben.

Die zentrale Steuerungselektronik 25 steht ferner über eine Signalleitung 16 mit der Überwachungselektronik 18 des stationären Batteriespeichers 15 in Verbindung.

Zur Absicherung des Spannungsnetzes 10 kann ferner vorgesehen sein, vor dem Knoten 8 eine Leistungsüberwachungseinheit 27 anzuordnen, die den Netzstrom I_{N} und/oder die auf der überwachten Phase vom Spannungsnetz 10 abgegebene Leistung erfasst. Zweckmäßig ist die Leistungsüberwachungseinheit über eine Signalleitung 26 mit der zentralen Steuerungselektronik 25 verbunden.

Die Leistungsüberwachungseinheit 27 hat zweckmäßig die höchste Priorität in der Schutzschaltung 1 und steht über eine Not-Aus-Leitung 28 mit der Ladevorrichtung 3 sowie mit einer Not-Aus-Leitung mit dem AC/DC-Spannungswandler 17 in Verbindung. Überschreitet die vom Spannungsnetz 10 abgegebene Leistung bzw. der in der Phase auftretende Netzladestrom I_{N} einen vorgegebenen Spitzenwert Is, wird die Ladevorrichtung 3 und der AC/DC-Spannungswandler 17 abgeschaltet.

Die Stromsammelschiene 13 führt Wechselspannung bzw. Wechselstrom. Der Netzanschluss 9 einer Phase des Spannungsnetzes 10 und der stationäre Batteriespeicher 15 sind über die Stromsammelschiene 13 wechselstromseitig gekoppelt.

Zum Laden eines mobilen elektrischen Batteriespeichers 5, z. B. eines Batteriespeichers in einem elektrischen Kraftfahrzeug 7, wird dieses über eine Steckverbindung 30 und ein Ladekabel 32 mit dem Ladeanschluss 31 verbunden. Der der Ladevorrichtung 3 zufließende Gesamtladestrom I_{G} setzt sich zusammen aus dem Netzladestrom I_{N} einerseits und dem zugeführten Batterieladestrom I_{B} des stationären Batteriespeichers 15 andererseits.

Um eine Überlastung des Netzanschlusses 9 und/oder ein Ansprechen der Sicherungsanordnung 11 zu vermeiden, ist vorgesehen, dass nach Herstellen der elektrischen Verbindung mit der Ladevorrichtung 3 der angeforderte Ladestrom zunächst aus dem Spannungsnetz 10 bereitgestellt wird, wobei ein vorgegebener Maximalwert nicht überschritten wird. Die Steuerungselektronik stellt die Stromanteile des zugeführten Batterieladestroms I_{B} und des zugeführten Netzladestroms I_{N} derart ein, dass der Netzladestrom einen vorgegebenen Maximalstrom nicht überschreitet.

So kann vorgesehen sein, dass mit beginnendem Ladevorgang der Ladestrom zunächst aus dem Spannungsnetz 10 entnommen wird. Der Gesamtladestrom I_{G} entspricht somit etwa dem Netzladestrom I_{N}. Mit Fortschreiten der Ladezeit wird der Anteil des zugeführten Batterieladestroms I_{B} am Gesamtladestrom I_{G} erhöht. Dadurch sinkt - bei gleichem Gesamtladestrom I_{G} - der Anteil des Netzladestroms I_{N} am Gesamtladestrom I_{G}. Die zentrale Steuerungselektronik 25 stellt über den steuerbaren AC/DC-Spannungswandler 17 den zufließenden Batterieladestrom I_{B} derart ein, dass der Anteil des Netzladestroms I_{N} am Gesamtladestrom I_{G} um einen vorgegebenen Sicherheitsabstand unter einen vorgegebenen Maximalstrom Iₘₐₓ absinkt.

Durch das schrittweise Annähern des Gesamtladestroms I_{G} an den zulässigen Maximalstrom Iₘₐₓ wird sichergestellt, dass eine Überlastung des Netzanschlusses 9 bei elektrischem Anschließen einer oder mehrerer Kraftfahrzeuge 7 mit hohen Ladeleistungen vermieden ist.

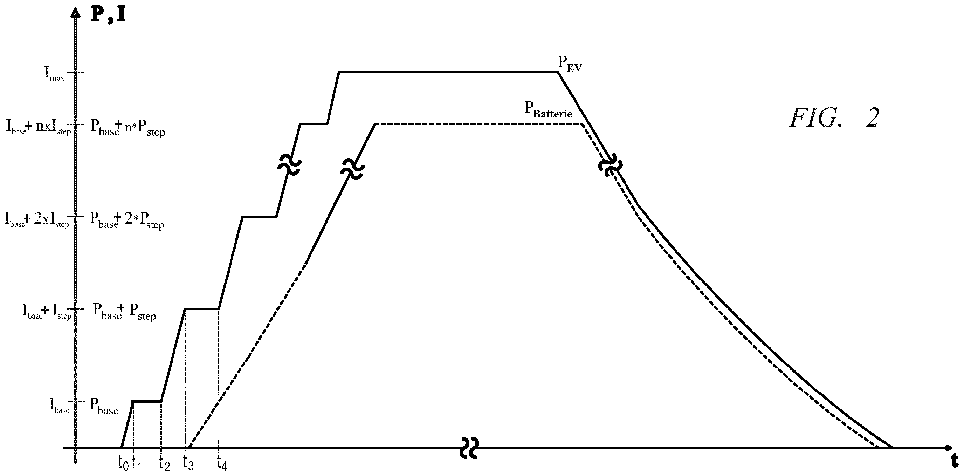

Es kann zweckmäßig sein, die Ladeleistung der einzelnen Ladeanschlüsse 31 entsprechend Fig. 2 stufenweise zu erhöhen. Zu Beginn eines Ladevorgangs im Zeitpunkt t₀ wird ein Basisstrom Ibase zugelassen und nach Erreichen des Basisstroms Ibase bzw. einer Basisladeleistung diese für einen Ladezeitraum t₁ bis t₂ aufrechterhalten. Im Zeitpunkt t₂ wird eine erste Stufe der Ladeleistung erhöht, der Basisstrom Ibase somit um einen Zusatzstrom Iₛₜₑₚ bzw. eine entsprechende Stufenleistung erhöht. Der Gesamtladestrom I_{G} steigt bis zum Zeitpunkt T₃ an, wird über einen Ladezeitraum bis t₄ gehalten, um dann um eine weitere Stufe erhöht zu werden. Auf diese Weise wird die maximale Ladeleistung bzw. der maximale Strom Iₘₐₓ des Netzanschlusses 9 sicher angefahren, ohne dass eine Überlastung des Netzanschlusses 9 auftritt.

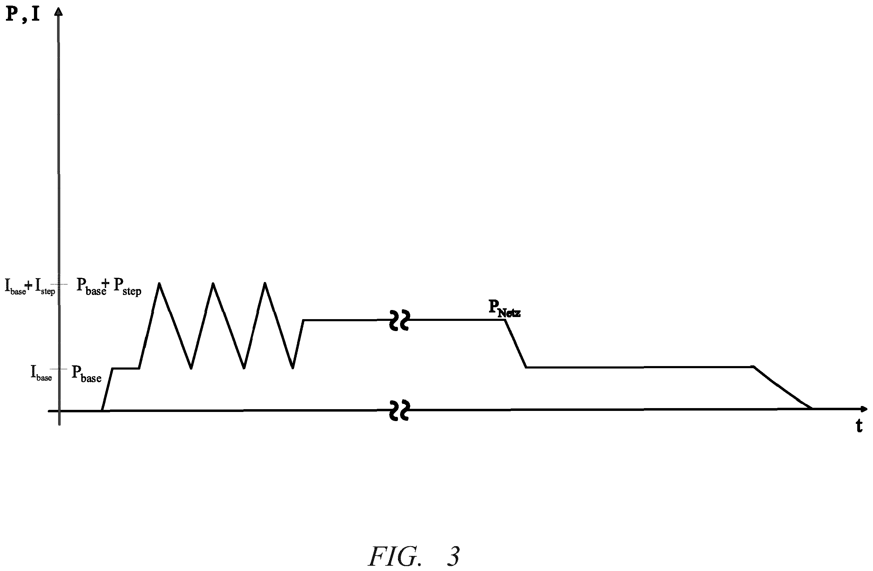

In Fig. 3 ist der Verlauf des Netzladestroms und des Batterieladestroms sowie des Gesamtladestroms dargestellt. Fig. 3 zeigt zugleich die Ladeleistung P über der Zeit t. Aus Fig. 3 ist ersichtlich, auf welche Weise dass die Anteile des Netzladestroms und des Batterieladestroms von der zentralen Steuerungselektronik 25 verändert werden, um eine Überlastung des Netzanschlusses 9 bei Einstecken eines oder mehrerer Batterien über jeweils ein Ladekabel 32 zu vermeiden. Wie dargestellt, pendelt die Ladeleistung über der Zeit t zwischen P_{base} und P_{base}+Pₛₜₑₚ und/oder P_{base}+ n^{∗}Pₛₜₑₚ, bis die Ladeleistung auf die Netzleistung P_{Netz} eingestellt ist.

Die Schutzschaltung 1 zwischen der Ladevorrichtung 3 und dem mobilen elektrischen Batteriespeicher 5 und einem Netzanschluss 9 wird wie folgt betrieben. Der der Ladevorrichtung 3 zugeführte Gesamtladestrom I_{G} (Fig. 1) setzt sich aus einem über den Netzanschluss 9 zugeführten Netzladestrom I_{N} und einem über den Spannungswandler 17 zugeführten Batterieladestrom I_{B} des stationären Batteriespeichers 15 zusammen. Die zentrale Steuerungselektronik 25 stellt die Anteile des Netzladestroms I_{N} und/oder des Batterieladestroms I_{B} am Gesamtladestrom I_{G} derart ein, dass mit Beginn eines Ladevorgangs ein erster Ladezeitraum mit einer ersten maximal zulässigen Ladeleistung und einem Gesamtladestrom I_{G} gestartet wird. In diesem ersten Ladezeitraum wird der größere Anteil des Gesamtladestroms I_{G} durch den Netzladestrom bereitgestellt, wobei die zentrale Steuerungselektronik 25 bis zum Ende des ersten Ladezeitraums den Stromanteil des Batterieladestroms I_{B} des stationären Batteriespeichers 15 erhöht, um den Netzladestrom I_{N} abzusenken. Danach wird am Ende des ersten Ladezeitraums die maximal zulässige Ladeleistung erhöht und der Ablauf beginnt von vorne.

Es kann zweckmäßig sein, die erhöhte Ladeleistung zunächst im stationären Batteriespeicher 15 zu entnehmen und den Batteriestrom I_{B} mit fortschreitender Ladezeit t abzusenken.

Ist an die Ladevorrichtung 3 keine aufzuladende Batterie 5 angeschlossen, wird die zentrale Steuerungselektronik 25 den AC/DC Spannungswandler 17 derart steuern, dass der stationäre Batteriespeicher 15 aus dem Spannungsnetz 10 mit einem Netzladestrom I_{L}, insbesondere einem maximalen Netzladestrom nachgeladen wird.

## Patentansprüche

1. Schutzschaltung (1) mit einem Anschluss für eine Ladevorrichtung (3) für einen mobilen elektrischen Batteriespeicher (5) wie einen Batteriespeicher in einem Kraftfahrzeug (7), und mit einem Netzanschluss (9), der über eine Sicherungsanordnung (11) an eine Stromsammelschiene (13) der Schutzschaltung (1) angeschlossen ist, und über den Netzanschluss (9) und die Stromsammelschiene (13) der Schutzschaltung (1) ein Netzladestrom (I_{N}) der Ladevorrichtung (3) zuführbar ist,
- und mit einem stationären Batteriespeicher (15), der über einen steuerbaren Spannungswandler (17) zwischen der Sicherungsanordnung (11) und der Ladevorrichtung (3) an die Stromsammelschiene (13) angeschlossen ist,
- sowie mit einem Strommessgerät (19), welches ausgelegt ist, den von der Stromsammelschiene (13) zu der Ladevorrichtung (3) fließenden Gesamtladestrom (IG) zu erfassen,
- und mit einer Steuerungselektronik (25), die mit einem Signalausgang (21) des Strommessgerätes (19) und mit einem Steuereingang (23) des steuerbaren Spannungswandlers (17) verbunden ist,
- wobei sich der Gesamtladestrom (IG) zur Ladevorrichtung (3) aus dem Netzladestrom (I_{N}) einerseits und einem über den Spannungswandler (17) gesteuert zugeführten Batterieladestrom (I_{B}) des stationären Batteriespeichers (15) andererseits zusammensetzt, und eine Steuerungselektronik (25) ausgebildet ist, die Stromanteile des zugeführten Batterieladestroms (I_{B}) und des zugeführten Netzladestroms (I_{N}) derart einzustellen, dass der Netzladestrom (I_{N}) einen vorgegebenen Maximalstrom (Iₘₐₓ) nicht überschreitet,
**dadurch gekennzeichnet, dass**
- die Steuerungselektronik (25) ausgebildet ist, mit fortschreitender Ladezeit (t) den Anteil des zugeführten Batterieladestroms (I_{B}) am Gesamtladestrom (IG) zu erhöhen, derart, dass der Anteil des Netzladestroms (I_{N}) am Gesamtladestrom (IG) um einen vorgegebenen Sicherheitsabstand (ΔS) unter den vorgegebenen Maximalstrom (Imax) liegt.

2. Schutzschaltung nach Anspruch 1,
**dadurch gekennzeichnet, dass** der Netzanschluss (9) und der stationäre Batteriespeicher (15) wechselstromseitig über die Stromsammelschiene (13) gekoppelt sind.

3. Schutzschaltung nach Anspruch 1,
**dadurch gekennzeichnet, dass** die Steuerungselektronik (25) ausgebildet ist, mit fortlaufender Ladezeit (t) den vorgegebenen Maximalstrom (Iₘₐₓ) bis auf einen zulässigen Endwert zu erhöhen.

4. Schutzschaltung nach Anspruch 1,
**dadurch gekennzeichnet, dass** die Steuerungselektronik (25) ausgebildet ist, mit fortlaufender Ladezeit (t) den vorgegebene Maximalstrom (Iₘₐₓ) stufenweise bis auf einen zulässigen Endwert zu erhöhen.

5. Schutzschaltung nach Anspruch 3 oder 4,
**dadurch gekennzeichnet, dass** der zulässige Endwert der Nennstrom (I_{Nenn}) der Sicherungsanordnung (11) ist.

6. Schutzschaltung nach Anspruch 1,
**dadurch gekennzeichnet, dass** die Ladevorrichtung (3) eine Ladesäule für elektrisch angetriebene Kraftfahrzeuge (7) ist.

7. Schutzschaltung nach Anspruch 1,
**dadurch gekennzeichnet, dass** der mobile Batteriespeicher (5) über eine lösbare Steckverbindung (30) mit der Ladevorrichtung (3) verbunden ist.

8. Schutzschaltung nach Anspruch 1,
**dadurch gekennzeichnet, dass** dem Netzanschluss (9) eine Leistungsüberwachungseinheit (27) zugeordnet ist, die über eine Not-Aus-Leitung (28, 29) mit dem Spannungswandler (17) und/oder der Ladevorrichtung (3) verbunden ist.

9. Schutzschaltung nach Anspruch 1,
**dadurch gekennzeichnet, dass** die Ladevorrichtung (3) mehrere Ladeanschlüsse (31) aufweist und die Steuerungselektronik (25) ausgebildet ist, die mehreren Ladeanschlüsse (31) getrennt zu steuern.

10. Verfahren zum Betrieb einer Schutzschaltung (1) zwischen einer Ladevorrichtung (3) für einen mobilen elektrischen Batteriespeicher (5) und einem Netzanschluss (9), über den der Ladevorrichtung (3) ein Netzladestrom (I_{N}) zugeführt ist, wobei der Ladevorrichtung (3) ein Gesamtladestrom (IG) zugeführt ist, der sich aus einem über den Netzanschluss (9) zugeführten Netzladestrom (I_{N}) und einem über einen Spannungswandler (17) zugeführten Batterieladestrom (I_{B}) eines stationären Batteriespeichers (15) zusammensetzt, und eine Steuerungselektronik (25) die Anteile des Netzladestroms (I_{N}) und des Batterieladestroms (I_{B}) am Gesamtladestrom (IG) einstellt, wobei mit Beginn eines Ladevorgangs ein erster Ladezeitraum (ti) mit einer ersten maximal zulässigen Ladeleistung und einem Gesamtladestrom (IG) gestartet wird, dessen größerer Anteil durch den Netzladestrom (I_{N}) bereitgestellt ist, **dadurch gekennzeichnet, dass**
die Steuerungselektronik (25) bis zum Ende des ersten Ladezeitraums (ti) den Stromanteil des Batterieladestroms (I_{B}) des stationären Batteriespeichers (15) erhöht und den Netzladestrom (I_{N}) absenkt.

11. Verfahren nach Anspruch 10,
**dadurch gekennzeichnet, dass** am Ende des ersten Ladezeitraums (ti) die maximal zulässige Ladeleistung erhöht wird.

12. Verfahren nach Anspruch 10,
**dadurch gekennzeichnet, dass** die erhöhte Ladeleistung zunächst dem stationären Batteriespeicher (15) entnommen wird und der Batteriestrom (I_{B}) mit fortschreitender Ladezeit (t) abgesenkt wird.

13. Verfahren nach Anspruch 10,
**dadurch gekennzeichnet, dass** der Ladezyklus des mobilen Batteriespeichers (5) in mehrere aufeinander folgende Leistungsstufen eingeteilt ist, und mit dem Start einer Leistungsstufe die erhöhte Ladeleistung zunächst dem stationären Batteriespeicher (15) entnommen und der Batteriestrom (I_{B}) mit fortschreitender Ladezeit (t) abgesenkt wird, bis die erhöhte Ladeleistung über den Netzanschluss (9) zufließt.

## Claims

1. Protective circuit (1) having a connection for a charging device (3) for a mobile electrical battery store (5) such as a battery store in a motor vehicle (7), and having a grid connection (9) which is connected to a busbar (13) of the protective circuit (1) via a protection arrangement (11), and a grid charging current (I_{N}) is able to be supplied to the charging device (3) via the grid connection (9) and the busbar (13) of the protective circuit (1),
- and having a stationary battery store (15) which is connected to the busbar (13) between the protection arrangement (11) and the charging device (3) via a controllable voltage converter (17),
- and having a current measuring device (19) which is designed to measure the total charging current (IG) flowing from the busbar (13) to the charging device (3),
- and having control electronics (25) which are connected to a signal output (21) of the current measuring device (19) and to a control input (23) of the controllable voltage converter (17),
- wherein the total charging current (IG) to the charging device (3) consists, firstly, of the grid charging current (I_{N}) and, secondly, of a battery charging current (I_{B}), supplied in a controlled manner via the voltage converter (17), of the stationary battery store (15), and control electronics (25) are designed to set the current proportions of the supplied battery charging current (I_{B}) and of the supplied grid charging current (I_{N}) in such a way that the grid charging current (I_{N}) does not exceed a predefined maximum current (Iₘₐₓ),
**characterized in that**
- the control electronics (25) are designed, as charging time (t) elapses, to increase the proportion of the supplied battery charging current (I_{B}) in the total charging current (IG) in such a way that the proportion of the grid charging current (I_{N}) in the total charging current (IG) is below the predefined maximum current (Iₘₐₓ) by a predefined safety margin (ΔS).

2. Protective circuit according to Claim 1,
**characterized in that** the grid connection (9) and the stationary battery store (15) are coupled on the AC side via the busbar (13).

3. Protective circuit according to Claim 1,
**characterized in that** the control electronics (25) are designed, as charging time (t) elapses, to increase the predefined maximum current (Iₘₐₓ) up to a permissible final value.

4. Protective circuit according to Claim 1,
**characterized in that** the control electronics (25) are designed, as charging time (t) elapses, to increase the predefined maximum current (Iₘₐₓ) up to a permissible final value in stages.

5. Protective circuit according to Claim 3 or 4,
**characterized in that** the permissible final value is the nominal current (I_{Nenn}) of the protection arrangement (11).

6. Protective circuit according to Claim 1,
**characterized in that** the charging device (3) is a charging post for electrically driven motor vehicles (7).

7. Protective circuit according to Claim 1,
**characterized in that** the mobile battery store (5) is connected to the charging device (3) via a detachable plug connection (30).

8. Protective circuit according to Claim 1,
**characterized in that** a power monitoring unit (27) is assigned to the grid connection (9) and is connected to the voltage converter (17) and/or the charging device (3) via an emergency discharge line (28, 29).

9. Protective circuit according to Claim 1,
**characterized in that** the charging device (3) has a plurality of charging connections (31) and the control electronics (25) are designed to control the plurality of charging connections (31) separately.

10. Method for operating a protective circuit (1) between a charging device (3) for a mobile electrical battery store (5) and a grid connection (9), via which a grid charging current (I_{N}) is supplied to the charging device (3), wherein a total charging current (IG) is supplied to the charging device (3), which total charging current consists of a grid charging current (I_{N}), supplied via the grid connection (9), and a battery charging current (I_{B}), supplied via a voltage converter (17), of a stationary battery store (15), and control electronics (25) set the proportions of the grid charging current (I_{N}) and of the battery charging current (I_{B}) in the total charging current (IG), wherein, when a charging operation is begun, a first charging time (ti) is started with a first maximum permissible charging power and with a total charging current (IG), the larger proportion of which is provided by the grid charging current (I_{N}),
**characterized in that**
the control electronics (25), up until the end of the first charging time (ti), increase the current proportion of the battery charging current (I_{B}) of the stationary battery store (15) and decrease the grid charging current (I_{N}).

11. Method according to Claim 10,
**characterized in that**, at the end of the first charging time (ti), the maximum permissible charging power is increased.

12. Method according to Claim 10,
**characterized in that** the increased charging power is initially drawn from the stationary battery store (15) and the battery current (I_{B}) is decreased as charging time (t) elapses.

13. Method according to Claim 10,
**characterized in that** the charging cycle of the mobile battery store (5) is divided into a plurality of successive power stages, and, when a power stage is started, the increased charging power is initially drawn from the stationary battery store (15) and the battery current (I_{B}) is decreased as charging time (t) elapses until the increased charging power is flowing in via the grid connection (9).

## Revendications

1. Circuit de protection (1) comprenant un raccordement pour un dispositif de chargement (3) destiné à un accumulateur de batterie électrique mobile (5), tel qu'un accumulateur de batterie dans un véhicule automobile (7), et un raccordement au réseau (9) qui est raccordé à une barre omnibus électrique (13) du circuit de protection (1) par l'intermédiaire d'un ensemble de fusible (11), et un courant de charge du réseau (I_{N}) peut être amené au dispositif de chargement (3) par l'intermédiaire du raccordement au réseau (9) et de la barre omnibus électrique (13) du circuit de protection (1),
- et comprenant un accumulateur de batterie stationnaire (15) qui est raccordé à la barre omnibus électrique (13) par l'intermédiaire d'un convertisseur de tension réglable (17) entre l'ensemble de fusible (11) et le dispositif de chargement (3),
- et comprenant un appareil de mesure de courant (19) qui est conçu pour détecter le courant de charge total (IG) circulant de la barre omnibus électrique (13) au dispositif de chargement (3),
- et comprenant une électronique de commande (25) qui est reliée à une sortie de signal (21) de l'appareil de mesure de courant (19) et à une entrée de commande (23) du convertisseur de tension réglable (17),
- dans lequel le courant de charge total (IG) pour le dispositif de chargement (3) se compose du courant de charge du réseau (I_{N}) d'une part et d'un courant de charge de batterie (I_{B}), amené de manière commandée par l'intermédiaire du convertisseur de tension (17), de l'accumulateur de batterie stationnaire (15) d'autre part, et une électronique de commande (25) est réalisée pour régler les parts de courant du courant de charge de batterie amené (I_{B}) et du courant de charge du réseau amené (I_{N}) de telle sorte que le courant de charge du réseau (I_{N}) ne dépasse pas un courant maximal prédéfini (Iₘₐₓ), **caractérisé en ce que**
- l'électronique de commande (25) est réalisée pour augmenter avec le temps de charge (t) la part du courant de charge de batterie amené (I_{B}) dans le courant de charge total (IG) de telle sorte que la part du courant de charge du réseau (I_{N}) dans le courant de charge total (IG) se situe sous le courant maximal prédéfini (Iₘₐₓ) avec une marge de sécurité prédéfinie (ΔS).

2. Circuit de protection selon la revendication 1, **caractérisé en ce que** le raccordement au réseau (9) et l'accumulateur de batterie stationnaire (15) sont couplés côté courant alternatif par l'intermédiaire de la barre omnibus électrique (13).

3. Circuit de protection selon la revendication 1, **caractérisé en ce que** l'électronique de commande (25) est réalisée pour augmenter avec le temps de charge (t) le courant maximal prédéfini (Iₘₐₓ) jusqu'à une valeur finale admissible.

4. Circuit de protection selon la revendication 1, **caractérisé en ce que** l'électronique de commande (25) est réalisée pour augmenter avec le temps de charge (t) le courant maximal prédéfini (Iₘₐₓ) progressivement jusqu'à une valeur finale admissible.

5. Circuit de protection selon la revendication 3 ou 4, **caractérisé en ce que** la valeur finale admissible est le courant nominal (I_{Nenn}) de l'ensemble de fusible (11).

6. Circuit de protection selon la revendication 1, **caractérisé en ce que** le dispositif de chargement (3) est une borne de recharge pour véhicules automobiles électriques (7).

7. Circuit de protection selon la revendication 1, **caractérisé en ce que** l'accumulateur de batterie mobile (5) est raccordé au dispositif de chargement (3) par l'intermédiaire d'une fiche de raccordement amovible (30).

8. Circuit de protection selon la revendication 1, **caractérisé en ce qu'**au raccordement au réseau (9) est associée une unité de surveillance de puissance (27) qui est reliée au convertisseur de tension (17) et/ou au dispositif de chargement (3) par l'intermédiaire d'une ligne d'arrêt d'urgence (28, 29).

9. Circuit de protection selon la revendication 1, **caractérisé en ce que** le dispositif de chargement (3) présente plusieurs raccordements de charge (31), et l'électronique de commande (25) est réalisée pour commander séparément les plusieurs raccordements de charge (31).

10. Procédé permettant de faire fonctionner un circuit de protection (1) entre un dispositif de chargement (3) pour un accumulateur de batterie électrique mobile (5) et un raccordement au réseau (9) par l'intermédiaire duquel un courant de charge du réseau (I_{N}) est amené au dispositif de chargement (3), un courant de charge total (IG) étant amené au dispositif de chargement (3) qui est composé d'un courant de charge du réseau (I_{N}) amené par l'intermédiaire du raccordement au réseau (9) et d'un courant de charge de batterie (I_{B}), amené par l'intermédiaire d'un convertisseur de tension (17), d'un accumulateur de batterie stationnaire (15), et une électronique de commande (25) règle les parts du courant de charge du réseau (I_{N}) et du courant de charge de batterie (I_{B}) dans le courant de charge total (IG), dans lequel, au début d'une opération de charge, une première période de charge (ti) avec une première puissance de charge admissible maximale et un courant de charge total (IG) dont la plus grande part est fournie par le courant de charge du réseau (I_{N}) est démarrée,
**caractérisé en ce que** l'électronique de commande (25) augmente jusqu'à la fin de la première période de charge (ti) la part de courant du courant de charge de batterie (I_{B}) de l'accumulateur de batterie stationnaire (15) et diminue le courant de charge du réseau (I_{N}).

11. Procédé selon la revendication 10, **caractérisé en ce que** la puissance de charge admissible maximale est augmentée à la fin de la première période de charge (t₁).

12. Procédé selon la revendication 10, **caractérisé en ce que** la puissance de charge augmentée est d'abord prélevée sur l'accumulateur de batterie stationnaire (15), et le courant de batterie (I_{B}) est diminué avec le temps de charge (t).

13. Procédé selon la revendication 10, **caractérisé en ce que** le cycle de charge de l'accumulateur de batterie mobile (5) est divisé en plusieurs niveaux de puissance consécutifs, et au début d'un niveau de puissance, la puissance de charge augmentée est d'abord prélevée sur l'accumulateur de batterie stationnaire (15) et le courant de batterie (I_{B}) est diminué avec le temps de charge (t) jusqu'à ce que la puissance de charge augmentée arrive par l'intermédiaire du raccordement au réseau (9).
